# EUROPEAN PATENT APPLICATION

(11) **EP 3 817 351 A1**
(43) Date of publication of application: **05.05.2021**
(21) Application number: 19205634.9
(22) Date of filing: 28.10.2019
(51) Int. Cl.: H04M 3/436, H04M 7/00, H04W 12/12

(54) **A SYSTEM FOR PERFORMING ANALYTICS AND BLOCKING FRAUDULENT SUBSCRIBER IDENTITIES IN A COMMUNICATION NETWORK**

(71) Applicant: SIGOS BVBA, 9050 Gent-Ledeberg (BE)
(72) Inventor: VERLINDE, Dirk, 8200 Sint-Andries (BE)
(74) Representative: IP HILLS NV

(57) **Abstract**

A system (200; 400; 500; 600; 700) for performing analytics and blocking fraudulent subscriber identities in a communication network (220; 420; 520; 620; 720), comprises:
- a database (201; 401; 501; 601; 701) of fraudulent subscriber identities;
- an analytics blocking device (202; 402; 502; 602; 702) configured to:
- receive for a call (261; 461; 561; 661; 761) to be terminated at a destination number (B) a call setup authorization request (265; 463; 563; 663; 763) from a switch or gateway (221; 423; 523; 623; 723), comprising the calling party number (A);
- compare the calling party number (A) with subscriber identities in the database (201; 401; 501; 601; 701); and
- instruct the switch or gateway (221; 423; 523; 623; 723) to release the call (261; 461; 561; 661; 761) in case the calling party number (A) is identified as fraudulent or allow the switch or gateway (221; 423; 523; 623; 723) to continue terminating the call (261; 461; 561; 661; 761) at the destination number (B) in case the calling party number (A) is not identified as fraudulent.

## Description

### Field of the Invention

The present invention generally relates to fraud protection in communication networks, like for instance protection against interconnect bypass fraud, refiling fraud, revenue sharing fraud, Wangiri fraud, etc., to assure business revenues. The invention more particularly concerns a system for analysing and blocking fraudulent subscriber identities in a communication network, i.e. subscriptions that are suspected from being used for fraud. Herein, analysing refers to analysis of the numbers involved in a call, whereas blocking concerns releasing a call that is fraudulent.

### Background of the Invention

Bypass operators use an interconnect bypass (also named "SIM Box") to reroute traffic of calling parties from the network of another operator to the network of a receiving operator without going through the interconnection facilities of the receiving operator. This results in loss of revenue for the receiving operator, degraded quality of audio or data connections, more frequent call interruptions, increased transmission delays, prolonged call establishment, etc. Several techniques exist for detecting the presence of an interconnect bypass, i.e. an interconnect gateway or SIM Box, in communications networks.

A first type of solutions to detect the presence of an interconnect bypass is known as profiling and implemented in a so-called Front Management System (FMS). The FMS analyzes data obtained from the operator's Call Detail Records (CDR) database in order to detect suspicious behavior that is typical for an interconnect bypass. Suspicious behavior like for instance absence of incoming calls, absence of SMS traffic, a high call diversity (above 80 %), etc., is reported by the FMS to enable the operator to deactivate one or more subscriptions that are suspected of being used by an interconnect bypass. Such FMS is for instance described in United States patent application US2009/0069047A1.

A second type of solutions to detect the presence of an interconnect bypass relies on test calls. A test call platform comprising probes or robots in networks of plural telecommunications operators, schedules and executes test calls between these probes, and analyses the received Calling Line Identification (CLI) in the test calls in order to detect bypass operations. Such test call platform is for instance described in European patents EP2671372B1, EP2509294B1 and EP2547083B1. As an alternative to test calls between probes or robots, real subscriber numbers may be used as destination for the test calls. These real subscriber numbers bring the advantage of reduced risk of counter-detection, but they must be temporarily forwarded when the test call is made and thus involve service interruption for the subscriber. Real subscriber number test calls are described in International patent application WO2017167900A1.

A third type of solutions to detect the presence of an interconnect bypass relies on social network analysis. Thereto, a graph database that maintains relationship information between subscriptions is consulted, and one or more of the following is verified:
- does a suspicious subscription only call destinations that have no relationship (destinations that do not call each other)?
- does a suspicious subscription receive only incoming calls from a party shortly after an outgoing call is made to that party (it is never called, it is only called back for instance in case of call interruption)?
- does a suspicious subscription only make outgoing calls to parties that received international/roaming calls in the past (less than 20 % of all subscriptions receive international calls)?
   Such social network based interconnect bypass detection is described in European patent application EP3119072A1.

Once a SIM Box is detected, the subscriber number(s) used by the SIM Box must be deactivated or incoming calls from such subscriber numbers must be blocked. A fraudulent SIM must be blocked fast because it can be profitable in less than 10 minutes.

A fraudulent SIM can be blocked through a provisioning system with access to the operator's home location register (HLR). The system detecting the fraudulent SIM (for example a test call based platform) reports fraudulent subscriber numbers in an ftp file to the provisioning system. In the provisioning system, a script is running to receive and read the ftp file, extract the fraudulent subscriber number(s) therefrom, and an Application Programming Interface or API with connectivity to the operator's HLR allows to deactivate the subscriber number by modifying a single bit in the HLR indicating the status of the SIM. Provisioning/HLR based blocking of a SIM can be done within minutes. After having blocked a fraudulent SIM, the operator's CDRs can be checked to verify if the fraudulent SIM has been blocked effectively.

Provisioning/HLR based blocking allows to block fraudulent SIMs belonging to the network under test. Fraudulent SIMs belonging to the network of a competitor however cannot be blocked. One can at best report the fraudulent SIM to the competitor and hope that the competitor deactivates the fraudulent SIM fast. Alternatively, the provisioning system may report the fraudulent SIM number to a switch or gateway and block incoming calls from such fraudulent SIM number at the switch or gateway. The latter blocking in switches/gateways of traffic coming from SIMs belonging to a competitor however requires approval from the regulator.

Blocking a SIM has effect for future calls originating from that SIM. An ongoing call however cannot be interrupted, which in case of a SIM Box may easily take 1 à 2 hours of continued loss of income for the terminating operator, as a SIM Box is often used to reroute long, international calls.

In general, there is a demand for improved solutions for fraud protection and business revenue assurance that allow to combine active and passive detection of fraudulent numbers, and that enable blocking SIMs, numbers or ranges of numbers of all operators, including fraudulent SIMs, numbers or ranges of numbers of other operators active in the country of the network under test or abroad. Numbers or ranges of numbers that may have to be blocked for instance are international premium rate service (IPRS) numbers or ranges, national premium rate service (PRS) numbers or ranges, private branch exchange (PBX) numbers, etc.

### Summary of the Invention

According to the present invention, the above identified objective is realized and one or more of the above identified shortcomings of prior art solutions are resolved by the system for performing analytics and blocking fraudulent subscriber identities in a communication network as defined by claim 1, the system comprising:
- a database configured to memorize fraudulent subscriber identities reported thereto by at least one or more fraud detection system;
- an analytics blocking device installed in the communication network and configured to:
   - receive for a call to be terminated at a destination number a call setup authorization request from a switch or gateway, the call setup authorization request at least comprising the calling party number of the call;
   - compare the calling party number of the call with subscriber identities in the database; and
   - instruct the switch or gateway to release the call in case the calling party number is identified as fraudulent by the database or allow the switch or gateway to continue terminating the call at the destination number in case the calling party number is not identified as fraudulent.

Thus, the system according to the invention relies on a database of fraudulent subscriber identities. The detection of fraudulent subscriber identities may be passive, for instance through CDR analysis or social network analysis, or may be active, for instance through test calls. The system according to the invention hence is compatible with any existing fraud detection system. Any of such systems or any plurality of such detection systems can connect to the database and register therein fraudulent subscriber identities.

The system according to the invention further relies on an analytics blocking device that corresponds to an active signalling device like for instance a service control point or SCP in the terminology of SS7-based Intelligent Networks, an application server or AS in the terminology of SIP-based IMS, a Service Management Function or SMF in a Service Based Architecture or SBA in for instance a 5G network, an Internet of Things or loT network, etc. The analytics blocking device for the aim of the invention is configured to receive a call setup authorization request from one or plural switches or gateways in the monitored communication network or - in the case of gateways - at the border between the monitored communication network and another communication network from which the call is received or where the call is delivered to. The call setup authorization request is a signalling message between the switch or gateway and the analytics blocking device identified as such and at least comprising the calling party number or A-number of the call to be terminated. Switch or gateway in the context of the current invention must be interpreted broadly to encompass also a softswitch, a proxy, a proxy using SIP instead of SS7, a session border controller or SBC or any other communication network element involved in transferring a call from the calling party to the called party. Upon receipt of the call setup authorization request, the analytics blocking device consults with the database of fraudulent subscriber identities to compare the calling party number with the subscriber identities memorized in the database as being fraudulent. In this context, the term "comparing" must be interpreted broadly and also encompasses a simple number lookup for the calling party number in the database, hence not necessarily requiring "a comparison" between the calling party number and each fraudulent subscriber identity stored in the database. When the calling party number is identified as fraudulent because this number appears in the database, the analytics blocking device replies to the call setup authorization request with instructions for the switch or gateway to release the call. Hence, a call originating from a fraudulent calling party shall not be terminated. In case the calling party number is not identified as fraudulent because this number does not appear in the database, the analytics blocking device replies to the call setup authorization request with instructions to continue terminating the call at the destination number.

According to the current state of the art, the analytics blocking device is expected to introduce a maximum delay of 25 milliseconds at call setup, which is an acceptable increase of the post-dial delay, and is expected to have a capacity of handling 200 calls per second. This capacity limit may be dealt with for instance by restricting the analytics blocking verification to national incoming calls only, to calls received from other networks only, to calls originating from specific cell IDs in cellular networks, to calls from other networks with specific cell IDs only, etc. The capacity limit alternatively may be dealt with by providing plural analytics blocking devices that operate redundantly and/or in a load-balanced manner, or may be dealt with in future by technology with higher processing speeds than currently available.

Thanks to the analytics blocking device, fraudulent SIM blocking is made possible for both operator owned SIMs and SIMs owned by another operator, for instance a competitive operator active in the same region or an international operator active abroad. As the analytics blocking device receives the calling party number or A-number, it will be able to counter calling party fraud or A-number fraud such as for instance SIM box fraud or bypass fraud wherein an interconnect bypass, sometimes named SIM box, is used to reroute traffic of calling parties from the network of another operator to the network of the receiving operator without going through the interconnection facilities of the receiving operator. The analytics blocking device thus provides a solution for blocking both on-net SIM boxes (installed in the operator's network) and off-net SIM boxes (installed in other operators' networks) from terminating calls in the operator's network wherein the analytics blocking device is installed.

In embodiments of the system for performing analytics and blocking fraudulent subscriber identities in a communication network according to the invention, defined by claim 2,
the analytics blocking device is further configured to:
- initiate a call attempt to the calling party number in case the calling party number is not identified as fraudulent by the database; and
- allow the switch or gateway to continue terminating the call at the destination number in case a busy signal is received in response to the call attempt, or
- analyse a response to the call attempt and detect no response or a route select failure;
- analyse call data records in case of no response or a route select failure, and detect fraud in case of absence of call data records for the calling party number;
- report the calling party number as fraudulent to the database; and
- instruct the switch or gateway to release the call in case the calling party number is identified as fraudulent.

Thus, the analytics blocking device may have intelligence embedded, being hardware and/or software, enabling to call the A-number that it extracts from the call setup authorisation request. This way, the analytics blocking device can detect types of fraud wherein the A-number is spoofed, like for instance refiling fraud. Refiling fraud consists in adapting or spoofing the A-number of a call in order to terminate the call via a specific trunk with advantageous tariffing, for instance a trunk used for national traffic or a trunk used for traffic between neighbouring operators with advantageous inter-operator tariffs. In case the call from the analytics blocking device to the A-number is returned by signalling indicating that the A-number is busy, the analytics blocking device assumes that the A-number is a regular number, not fraudulently used. The A-number is busy because it attempts to setup a call to be terminated in the communication network wherein the analytics blocking device is installed at the time the analytics blocking device attempts to call back, so this is expected behaviour. In case however the call from the analytics blocking device to the A-number is answered by a route select failure or in case of no response, the A-number is suspected to be spoofed. The analytics blocking device in such case consults the CDRs or call data records of the operator of the communication network wherein it is installed. In absence of a call data record for its call attempt to the A-number, the analytics blocking device concludes that the A-number is fraudulently used. The A-number is reported to the database as a fraudulent subscriber identity and the switch or gateway that sent the call setup authorization request is instructed to release the call.

This way, by performing an additional check for A-numbers that are not listed in the database through a call-back, the analytics blocking device detects types of A-number fraud like refiling fraud that are gaining popularity, and assists in completing and maintaining the database of fraudulent subscriber identities.

In embodiments of the system for performing analytics and blocking fraudulent subscriber identities in a communication network according to the invention, as defined by claim 3, the analytics blocking device is configured to:
- initiate the call attempt only when the call is received by the switch or gateway at a selected trunk or from a selected cell.

Indeed, attempting to call the A-number, analysing the response to such call attempt and eventually consulting the operator's CDRs increases the amount of analyses to be executed in parallel by the analytics blocking device. Executing this additional step for A-numbers that are not listed as fraudulent in the database may therefore be restricted to calls received from specific cells in cellular networks or calls received at specific trunks, used for instance for traffic that benefits from advantageous tariffing or receiving high volumes of traffic, because the risk for A-number spoofing in types of fraud like refiling fraud is higher there.

In embodiments of the system for performing analytics and blocking fraudulent subscriber identities in a communication network according to the present invention, as defined by claim 4,
the analytics blocking device is further configured to:
- activate monitoring of the call when allowing the switch or gateway to continue terminating the call at the destination number;
- continue to compare the calling party number with subscriber identities in the database; and
- instruct the switch or gateway to release the call in case the calling party number is identified as fraudulent by the database.

Indeed, optionally, the analytics blocking device may decide to stay in the loop while a call that is allowed to be terminated, is ongoing. Thereto, the analytics blocking device sends signalling to the switch or gateway that is allowed to terminate the call, the signalling indicating that the analytics blocking device switches from a notification mode to a monitoring mode for the call. In the monitoring mode, the analytics blocking device shall continue to monitor the call. The switch or gateway is informed of this fact and as a result thereof shall inform the analytics blocking device when the call is answered through a connect/establishment message and inform the analytics blocking device when the call is released through a release call message. The monitoring mode brings the advantage for the analytics blocking device that verification of the A-number can be continued and release of the call can be instructed to the switch or gateway to block the call at any point in time. If the A-number is listed in the database whereas it was not listed in the database at the time the call was setup, the analytics blocking device thus can still instruct the switch or gateway to release the call. This may be done prior to receipt of the connect/establishment message or after receipt of the connect/establishment message. In the latter situation, an ongoing call is blocked. An ongoing call from a fraudulent calling party that was not identified as fraudulent at call setup consequently may still be interrupted while the call is ongoing as soon as the calling party number becomes listed in the database.

The ability to interrupt ongoing calls from fraudulent calling parties brings important advantages compared to existing SIM blocking solutions that are only able to block fraudulent SIMs at call setup. Fraudulent calls are often lengthy resulting in substantial revenue loss for the operator. In case of SIM box fraud for example, a fraudulent call may easily take 1 à 2 hours of continued loss of income for the terminating operator. The ability to interrupt ongoing calls originating from a fraudulent subscriber identity as soon as the subscriber identity is identified as fraudulent, in addition to future calls from that subscriber identity, further contributes to the effectiveness of fraud protection and business revenue assurance.

In embodiments of the system for performing analytics and blocking fraudulent subscriber identities in a communication network according to the invention, as defined by claim 5,
- the database is further configured to memorize a type of blocking for fraudulent subscriber identities, the type of blocking being indicative for calling party fraud, called party fraud, or both; and
- the analytics blocking device is further configured to:
   - receive as part of the call setup authorization request also a called party number of the call;
   - compare the calling party number of the call with subscriber identities in the database whose type of blocking is indicative for calling party fraud or both;
   - compare the called party number of the call with subscriber identities in the database whose type of blocking is indicative for called party fraud or both; and
   - instruct the switch or gateway to release the call in case the calling party number or the called party number is identified as fraudulent by the database or allow the switch or gateway to continue terminating the call at the destination number in case the calling party number and the called party number are not identified as fraudulent.

Thus, advanced embodiments of the system according to the invention in addition to A-number types of fraud, wherein the A-number or calling party number is fraudulently used, also detect and block B-number types of fraud, wherein the B-number or called party number is fraudulently used. B-number type of fraud, generally known as revenue sharing fraud for example may consist of International Revenue Share Fraud (abbreviated IRSF), National Revenue Share Fraud (NRSF), Wangiri fraud, hacked PBX fraud, outbound roaming fraud.

In embodiments of the system wherein the call setup authorization request also contains the called party number or so-called B-number in addition to the calling party number or A-number, and wherein the database also maintains subscriber identities that have been used for revenue share fraud, the analytics blocking device can compare also the B-number of the call to be terminated with the subscriber identities in the database. Preferably, the database memorizes in addition to the fraudulent subscriber identities also the blocking type, such that the A-number must only be compared with fraudulent subscriber identities of type A or type AB, and the B-number must only be compared with fraudulent subscriber identities of type B or type AB. Thereto, the database must memorize a blocking type in relation to each fraudulent subscriber identity. A fraudulent subscriber identity x that was used in the past for A-number type of fraud shall for instance be memorized as (x, A). A fraudulent subscriber identity y that was used in the past for B-number type of fraud shall likely be memorized as (y, B). A fraudulent subscriber identity z that was used in the past for both A-number type of fraud and B-number type of fraud shall be memorized as (z, AB).

Like with A-number type of fraud, the analytics blocking device shall instruct the switch or gateway to release the call when its B-number is listed in the database as a fraudulent subscriber identity of blocking type B or blocking type AB, thus preventing the call from being terminated. The analytics blocking device shall also instruct the switch or gateway to release the call when its A-number is listed in the database as a fraudulent subscriber identity of blocking type A or blocking type AB. In case neither the A-number nor the B-number are identified as fraudulent, the analytics blocking device shall allow the switch or gateway to terminate the call at the destination number.

Blocking both A-number type of fraud or interconnect bypass fraud and B-number type of fraud or revenue share fraud through a single system further contributes to the effectiveness of fraud protection and business revenue assurance.

In embodiments of the system for performing analytics and blocking fraudulent subscriber identities in a communication network according to the invention, as defined by claim 6,
the analytics blocking device is further configured to:
- activate monitoring of the call when allowing the switch or gateway to continue terminating the call at the destination number;
- continue to compare the calling party number of the call with subscriber identities in the database whose type of blocking is indicative for calling party fraud or both;
- continue to compare the called party number of the call with subscriber identities in the database whose type of blocking is indicative for called party fraud or both; and
- instruct the switch or gateway to release the call in case the calling party number or the called party number is identified as fraudulent by the database.

Thus, optionally, as already explained above, the analytics blocking device may decide to stay in the loop during a call that is allowed to be terminated, also in embodiments where both the A-number and B-number are cleared against the database. Thereto, the analytics blocking device sends signalling to the switch or gateway that is allowed to terminate the call, the signalling indicating that the analytics blocking device switches from notification mode to a monitoring mode for the call. In the monitoring mode, the analytics blocking device shall continue to monitor the call. The switch or gateway is informed of this fact and as a result thereof shall inform the analytics blocking device when the call is answered by the destination through a connect/establishment message and inform the analytics blocking device when the call is released through a release call message. The monitoring mode brings the advantage for the analytics blocking device that verification of the A-number and B-number can be continued and release of the call can be instructed to the switch or gateway to block the call at any point in time. If the A-number is listed in the database for A-type blocking or AB-type blocking, whereas it was not listed in the database for any of these types of blocking at the time the call was setup, the analytics blocking device can still instruct the switch or gateway to release the call. Similarly, if the B-number is listed in the database for B-type blocking or AB-type blocking, whereas it was not listed in the database for any of these types of blocking at the time the call was setup, the analytics blocking device can still instruct the switch or gateway to release the call. This may be done prior to receipt of the connect/establishment message or after receipt of the connect/establishment message. In the latter situation, an ongoing call is blocked. An ongoing call from a fraudulent calling party or to a fraudulent called party that were not identified as fraudulent at call setup consequently may still be interrupted while the call is ongoing as soon as the calling party number or called party number becomes listed in the database.

The ability to interrupt ongoing calls from fraudulent calling parties or to fraudulent called parties brings important advantages compared to existing SIM blocking solutions that are only able to block fraudulent SIMs at call setup. Fraudulent calls are often lengthy resulting in substantial revenue loss for the operator. The ability to interrupt ongoing calls originating from or destined to a fraudulent subscriber identity as soon as the subscriber identity is identified as fraudulent, in addition to future calls from or to that subscriber identity, further contributes to the effectiveness of fraud protection and business revenue assurance.

In embodiments of the system for performing analytics and blocking fraudulent subscriber identities in a communication network according to the invention, as defined by claim 7, the analytics blocking device is configured to:
- request the monitoring of the call only when the call is received by the switch or gateway at a selected trunk or from a selected cell.

Monitoring ongoing calls shall consume additional processing resources of the analytics blocking device, thus further restricting its capacity of the analytics blocking device to handle new calls to terminated or released at setup. The monitoring may therefore be restricted to calls received from one or more specific cells in cellular networks or calls received at one or more specific trunks, that pose a higher risk for being used for fraudulent calls.

Embodiments of the system for performing analytics and blocking fraudulent subscriber identities in a communication network according to the invention, as defined by claim 8, further comprise an application programming interface for data exchange between the analytics blocking device and the switch or gateway using one of the following protocols:
- SS7/INAP;
- SS7/CAP;
- SS7/MAP;
- SIP;
- DIAMETER;
- HTTP.

SS7 or Signaling System No. 7 is a set of telephony signalling protocols that is used to set-up and release telephone calls in most parts of the worldwide public switched telephone network (PSTN). INAP or the Intelligent Network Application Protocol is part of the SS7 protocol suite and a signalling protocol used in Intelligent Networking (abbreviated IN), for instance between a switch and Service Control Point (abbreviated SCP) as logic for controlling telecommunications services migrated from traditional switching points to computer based service independent platforms. CAP or the CAMEL Applicant Part is another signalling protocol of the SS7 protocol suite, used in the Intelligent Network (IN) architecture and allowing value-added services in mobile rather than fixed networks. MAP or the Mobile Application Part at last is another SS7 protocol that provides an application layer for the various nodes in GSM, UMTS and GPRS networks to provide services. For situations where the connection between switch and analytics blocking device can run over both a physical cable or IP, the SIGTRAN protocol suit that implements levels 2, 3 and 4 protocols compatible with SS7 may be used.

In future, it is expected that INAP/CAP/MAP tend to be replaced by SIP or DIAMETER. SIP or the Session Initiation Protocol is a signalling protocol used for initiating, maintaining and terminating real-time sessions including voice and video calls over IP. DIAMETER is an authentication, authorization and accounting protocol for computer networks that allows a single server to apply policies for many services.

In a farther future, it is expected that HTTP or the HyperText Transfer Protocol, defining what actions Web servers and browsers should take in response to certain commands, may be used instead of INAP/CAP/MAP between a switch or gateway and the analytics blocking device according to the invention.

Each of the above protocols enable to share A-number and B-number between switch or gateway and the analytics blocking device, and enable the analytics blocking device to instruct terminating or releasing the call to switch or gateway. Signalling messages like the Initiate Call Attempt message (abbreviated ICA) of CAP, SIP or HTTP can be exploited by embodiments of the present invention to allow the analytics blocking device to call back the A-number and analyse the response as an additional verification step in situations where the A-number is not listed as fraudulent in the database.

Embodiments of the system for performing analytics and blocking fraudulent subscriber identities in a communication network according to the invention, as defined by claim 9, further comprise an application programming interface for data exchange between the one or more fraud detection system and the database using one of the following protocols:
- FTP;
- HTTP.

Indeed, suitable protocols allowing fraud detection systems to fill the database of fraudulent subscriber identities are the File Transfer Protocol (abbreviated FTP) or the HyperText Transfer Protocol (abbreviated HTTP).

Embodiments of the system for performing analytics and blocking fraudulent subscriber identities in a communication network according to the current invention, as defined by claim 10, comprise multiple analytics blocking devices similar to said analytics blocking device and configured for redundant communication with switches or gateways in said communication network.

Indeed, plural analytics blocking devices can be deployed, sharing a single database of fraudulent subscriber identities. The analytics blocking devices can be coupled redundantly with the switches and gateways in the communication network through a matrix of signalling transfer points, which are devices enabling the analytics blocking device to interface with the switches or gateways. Such redundant deployment brings the advantage that each of the analytics blocking devices can handle call setup authorization requests from each of the switches or gateways. The load of requests generated by the switches or gateways can be balanced across the analytics blocking devices which according to current state of the art technology each have a capacity of handling 200 call setup authorization requests per second. The number of analytics blocking devices thus can be determined to tailor the operator's expected needs. Analytics blocking devices can be added whenever needed, thus providing a scalable fraud detection and blocking solution for the operator whose investments can be spread in time to meet growth in traffic and business revenues.

Embodiments of the system for performing analytics and blocking fraudulent subscriber identities in a communication network according to the invention, as defined by claim 11, comprise a messaging device configured to provide information to the calling party in the form of a voice message or text message.

Thus, advantageous embodiments inform the calling party of eventual fraud through a voice message or text message. This information is particularly useful in situations where B-number type of fraud is detected as a consequence of which the call is released. In order to avoid that the calling party re-attempts to reach the B-number, it is useful to inform the calling party of the reason why the call to the B-number was released. In case the call is released without sending a voice or text message to the calling party, the release cause value can be configured in the analytics blocking device. For example, the cause value may have values between 0 and 127, with "19" meaning "reject call", "17" meaning "busy", etc.

According to a second aspect of the present invention, the above identified objective is realized and one or more of the above identified shortcomings of prior art solutions are resolved by a method of performing analytics and blocking fraudulent subscriber identities in a communication network, the method comprising:
- memorizing in a database fraudulent subscriber identities reported thereto by at least one or more fraud detection system;
- at an analytics blocking device installed in the communication network:
   - receiving for a call to be terminated at a destination number a call setup authorization request from a switch or gateway, the call setup authorization request at least comprising the calling party number of the call;
   - comparing the calling party number of the call with subscriber identities in the database; and
   - instructing the switch or gateway to release the call in case the calling party number is identified as fraudulent by the database or allowing the switch or gateway to continue terminating the call at the destination number in case the calling party number is not identified as fraudulent.

### Brief Description of the Drawings

Fig. 1 illustrates operation of a system for blocking on-net SIM box fraud according to the prior art;
Fig. 2 illustrates operation of an embodiment of the system for blocking fraudulent subscriber identities according to the invention in case of on-net SIM box fraud;
Fig. 3 illustrates operation of a system for blocking off-net SIM box fraud according to the prior art;
Fig. 4 illustrates operation of an embodiment of the system for blocking fraudulent subscriber identities according to the invention in case of off-net SIM box fraud;
Fig. 5 illustrates operation of an embodiment of the system for blocking fraudulent subscriber identities according to the invention in case of refiling fraud;
Fig. 6 illustrates operation of an embodiment of the system for blocking fraudulent subscriber identities according to the invention in case of a first type of revenue sharing fraud also known as Wangiri call attempts;
Fig. 7 illustrates operation of an embodiment of the system for blocking fraudulent subscriber identities according to the invention in case of a second type of revenue sharing fraud also known as Wangiri call backs; and
Fig. 8 illustrates a computing system suitable for hosting the system for performing analytics and blocking fraudulent subscriber identities according to the present invention and suitable for implementing the method for performing analytics and blocking fraudulent subscriber identities according to the invention.

### Detailed Description of Embodiment(s)

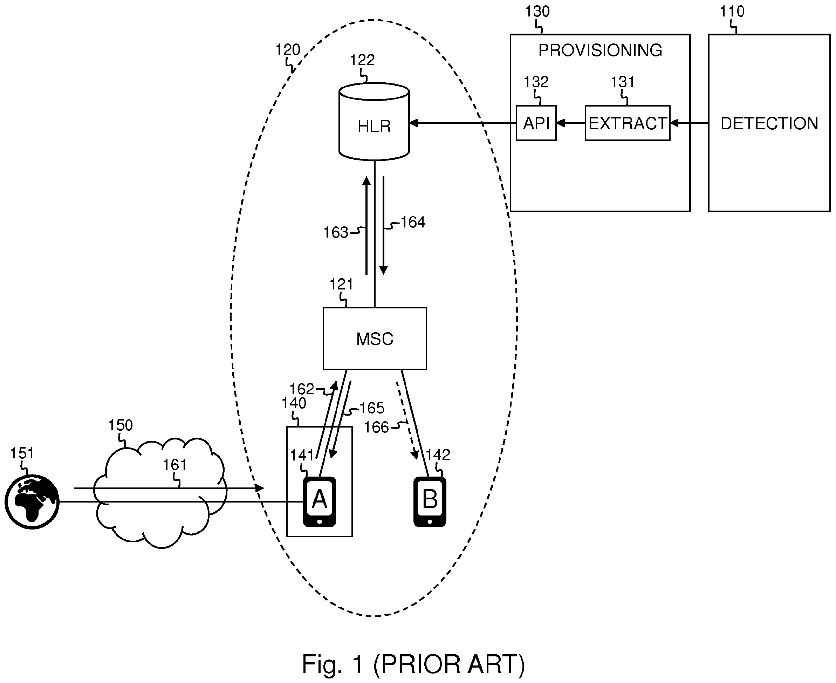

Fig. 1 illustrates existing blocking of a fraudulent subscriber identity module 141, used in an on-net SIM box 140 to route international calls originating from networks 151 of other operators to destinations in the network 120 of a receiving operator without going through the regular interconnection facilities of the receiving operator. In Fig. 1 it is assumed that SIM 141 with number A has been detected as a fraudulent SIM used for interconnect bypass fraud by detection system 110, for instance based on CDR analysis, test calls or any other interconnect bypass detection technology. The detection system 110 reports the fraudulent number A as part of an ftp (file transfer protocol) file to provisioning system 130. In the provisioning system 130, extraction module 131 runs a script to receive and read the ftp file, and to extract therefrom the fraudulent number A, possibly amongst other fraudulent SIM numbers. An API 132 with connectivity to the home location register or HLR 122 of the network 120 wherein number A is registered as subscriber, modifies the status bit of number A in this HLR 122 such that the fraudulent subscriber number A becomes deactivated. In Fig. 1, an international call 161 towards a destination SIM 142 with number B that is victim of on-net interconnect bypass fraud by SIM 141 with number A is considered. For such an international call 161, routed for example from a network abroad 151 across the internet 150, and intercepted for termination at called party B by the operator of SIM box 140 at a low termination rate, the incoming call 161 shall be replaced by a call setup request 162 for a call from fraudulent SIM 141 to destination 142 with number B. In this call setup request 162, the original caller ID of call 161 shall be replaced with number A as a consequence of which a low local call termination rate shall be applicable instead of a high international call termination rate. This call setup request 162 is sent to mobile switching centre 121 which, as part of the call setup process, sends an authorization request 163 to HLR 122. As the calling party number A of call setup request 162 is deactivated in HLR 122, the latter HLR 122 shall reply to mobile switching centre 121 with a message 164 instructing to block or release the call originating from deactivated, fraudulent calling party A. The mobile switching centre 121 thereupon sends a call release message 165 to fraudulent SIM 141 as a result of which the call from fraudulent SIM 141 is blocked. In a situation where the number A of fraudulent SIM 141 is not yet detected as a fraudulent number and/or not yet deactivated in HLR 122, HLR 122 shall allow mobile switching centre 121 to terminate the call at its destination B, and the latter mobile switching centre 121 will consequently terminate the call from calling party A to called party B at SIM 142 as is indicated by dashed arrow 166. Existing blocking of fraudulent subscriber identities hence relies on a detection system 110 reporting fraudulent subscriber identities via a provisioning system 130 to the HLR 122 wherein the fraudulent numbers are deactivated. This blocking solution however works only for on-net SIM boxes (because only SIMs belonging to the operator of network 120 are registered in HLR 122 and as such can be deactivated) and the blocking is restricted to newly setup calls. Ongoing calls from fraudulent SIMs are not interrupted.

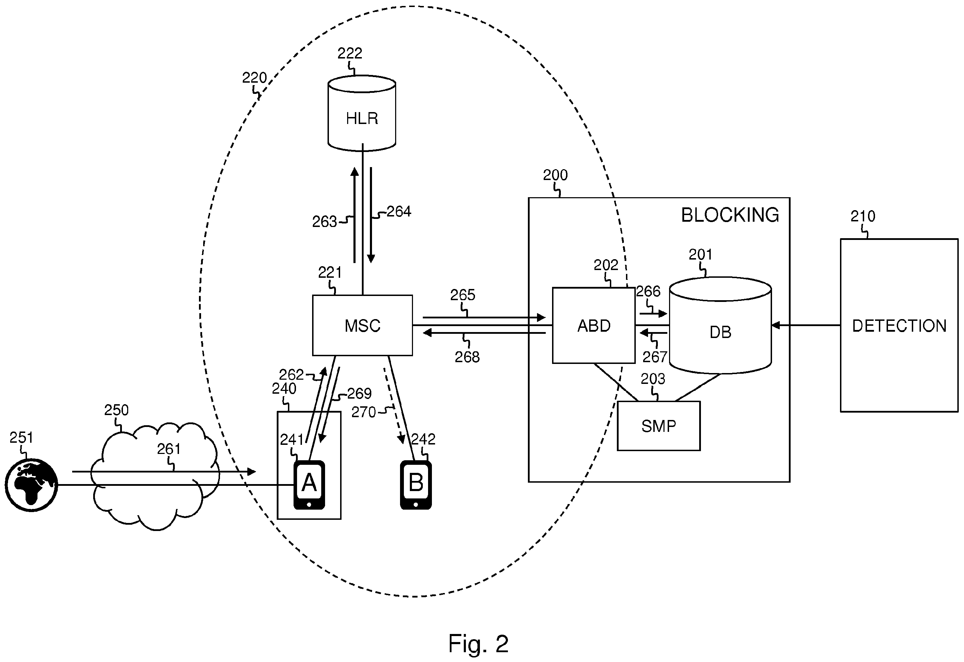

Fig. 2 illustrates blocking according to an embodiment of the invention of a fraudulent SIM 241 used for interconnect bypass fraud in an on-net SIM box 240 to route international calls originating from networks 251 of other operators to destinations in the network 220 of a receiving operator without going through the regular interconnection facilities of the receiving operator. In Fig. 2 it is assumed that SIM 241 with number A has been detected as a fraudulent SIM used for interconnect bypass fraud by detection system 210, for instance based on CDR analysis, test calls or any other interconnect bypass detection technology. The detection system 210 reports the fraudulent number A to a database 201 of fraudulent subscriber identities that forms part of blocking system 200. The API used to interface between the detection system 210 and the blocking system 200 may for instance rely on file exchange via ftp (file transfer protocol) or may rely on HTTP (HyperText Transfer Protocol) web services. In Fig. 2, an international call 261 to a destination SIM 242 with number B is considered. For this international call 261 to a destination number B, routed for example from a network abroad 251 across the internet 250, and intercepted to be terminated at called party B by the operator of SIM box 240 at a low termination rate, the incoming call 261 shall be replaced by a call setup request 262 for a local call from fraudulent SIM 241 with number A to SIM 242 with number B. This call setup request 262 is sent to mobile switching centre 221 which, as part of the call setup process, sends an authorization request 263 to HLR 222. HLR 222 shall reply with a message 264 allowing mobile switching centre 221 to terminate the call from calling party A at called party B because HLR 222 is assumed not to be aware of any fraud by SIM 241. Mobile switching centre 221 however - in addition to consulting HLR 222 as part of the regular call setup process - also sends a call setup authorization request 265 to analytics blocking device 202 that forms part of the blocking system 200. The call setup authorization request 265 may for instance be an Initial Detection Point message or IDP message at least comprising the number A of the calling party, i.e. an SS7 message similar to the IDP message that the switch 221 would send to a Service Control Point or SCP in an Intelligent Network or IN when it requires further instructions from such SCP to route a call. Upon receipt of the call setup authorization request 265, the analytics blocking device 202 contacts the database 201 to verify if the calling party number A contained in message 265 is listed in the database 201 as a fraudulent subscriber number or not. The analytics blocking device 202 thereto for instance sends a query message 266 comprising the number A extracted from message 265, and in return receives message 267 confirming that the number A is listed as fraudulent in the database 201. The interface between the analytics blocking device 202 and database 201 is a database application programming interface or database API, like for instance an ODBC (Open Database Connectivity) interface. Upon receipt of message 267 identifying number A as a fraudulent identity, the analytics blocking device 202 issues a call release message 268 and sends this call release message 268 as a response to call setup authorization request 265 to the mobile switching centre 221. The mobile switching centre 221 translates the call release message 268 into a call release message 269 that is sent to SIM 241 as a result of which the call 261 is blocked. In the situation where message 267 would indicate that number A is not listed as a fraudulent identity in database 201, analytics blocking device 202 would issue a call continuation message and send this call continuation message in response to the call setup authorization request 265 to the mobile switching centre 221. In the latter situation, the mobile switching centre 221 would continue and terminate the call at SIM 242 with number B as is indicated by dashed arrow 270 in Fig. 2. It is further noticed that Fig. 2 shows Service Managed Point or SMP 203 as part of the blocking system 200. SMP 203 is a central manager interfacing with both the analytics blocking device 202 and the database 201 of fraudulent subscriber identities and consequently fulfils a role of management function for the analytics blocking device 202.

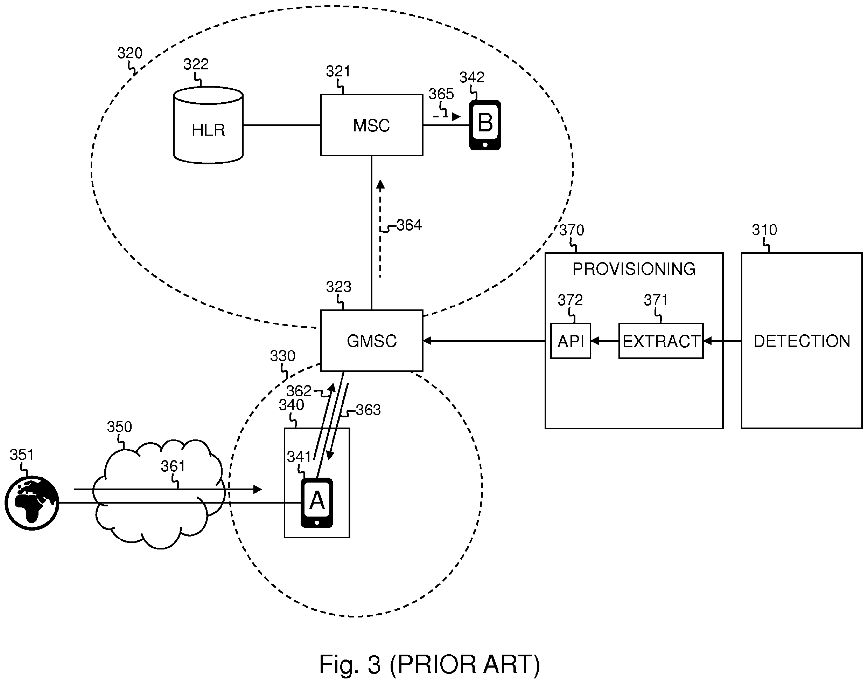

Fig. 3 illustrates existing blocking of a fraudulent subscriber identity module 341, used in an off-net SIM box 340 to route international calls originating from networks 351 of other operators to destinations B in the network 320 of a receiving operator without going through the regular interconnection facilities of the receiving operator. In Fig. 3 it is assumed that SIM 341 with number A has been detected as a fraudulent SIM used for interconnect bypass fraud by detection system 310, for instance based on CDR analysis, test calls or any other interconnect bypass detection technology. The detection system 310 reports the fraudulent number A as part of an ftp (file transfer protocol) file to provisioning system 370. In the provisioning system 370, extraction module 371 runs a script to receive and read the ftp file, and to extract therefrom the fraudulent number A, possibly amongst other fraudulent SIM numbers. An API 372 with connectivity to gateway 323 at the border between network 330 wherein the off-net SIM box 340 is active and the network 320 wherein number B is registered as a subscriber, reports that number A is fraudulent to gateway 323. In Fig. 3, an international call 361 towards a destination SIM 342 with number B that is victim of off-net interconnect bypass fraud by SIM 341 with number A is considered. For such an international call 361, routed for example from a network abroad 351 across the internet 350, and intercepted for termination at called party B by the operator of SIM box 340 at a low termination rate, the incoming call 361 shall be replaced by a call setup request 362 for a call from fraudulent SIM 341 to destination 342 with number B. In this call setup request 362, the original caller ID of call 361 shall be replaced with number A as a consequence of which a low call termination rate, for instance agreed between the operators of neighbouring networks 330 and 320, shall be applicable instead of a high international call termination rate. This call setup request 362 is sent to gateway 323. As the calling party number A of call setup request 362 is registered as fraudulent by gateway 323, the latter gateway 323 shall reply to fraudulent SIM 341 with a call release message 363 as a result of which the call from fraudulent SIM 341 is blocked. In a situation where the number A of fraudulent SIM 341 is not yet detected as a fraudulent number and/or not yet reported to gateway 323 as fraudulent, gateway 323 shall allow mobile switching centre 321 to terminate the call at its destination B, and the latter mobile switching centre 321 will consequently terminate the call from calling party A to called party B at SIM 342 as is indicated by dashed arrows 364 and 365, after consultation of HLR 322. Existing blocking of calls from off-net fraudulent subscriber identities hence relies on a detection system 310 reporting fraudulent subscriber identities via a provisioning system 370 to gateways 323 between the fraud protected communication network 320 and other networks 330 that are vulnerable for interconnect bypass fraud because low interconnect/termination rates exist. The existing off-net SIM box blocking requires a provisioning system 370 that interfaces with gateways 323 and the latter blocking in switches/gateways 323 of traffic coming from SIMs 341 belonging to a competitive operator also requires approval from the regulator. This blocking is also restricted to newly setup calls. Ongoing calls from fraudulent SIMs are not interrupted.

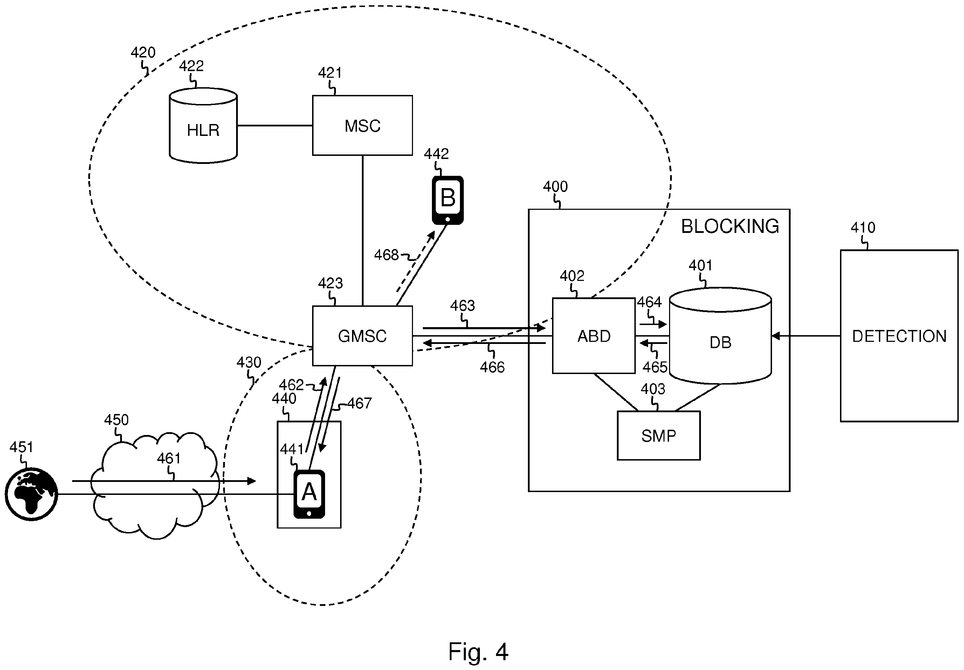

Fig. 4 illustrates blocking according to an embodiment of the invention of a fraudulent off-net SIM 441 used for interconnect bypass fraud in an off-net SIM box 440 to route international calls originating from networks 451 of other operators to destinations B in the network 420 of a receiving operator without going through the regular interconnection facilities of the receiving operator. In Fig. 4 it is assumed that SIM 441 with number A has been detected as a fraudulent SIM used for interconnect bypass fraud by detection system 410, for instance based on CDR analysis, test calls or any other interconnect bypass detection technology. The detection system 410 reports the fraudulent number A to a database 401 of fraudulent subscriber identities that forms part of blocking system 400. The API used to interface between the detection system 410 and the blocking system 400 may for instance rely on file exchange via ftp (file transfer protocol) or may rely on HTTP (HyperText Transfer Protocol) web services. In Fig. 4, an international call 461 to a destination SIM 442 with number B is considered. For this international call 461 to a destination number B, routed for example from a network abroad 451 across the internet 450, and intercepted to be terminated at called party B by the operator of SIM box 440 making benefit of low interconnect/termination rates between networks 430 and 420, the incoming call 461 shall be replaced by a call setup request 462 for a call from fraudulent SIM 441 with number A in network 430 to SIM 442 with number B in network 420. This call setup request 462 is sent to the gateway 423 between network 430 and network 420. The gateway 423 - in addition to consulting HLR 422 via mobile switching centre 421 as part of the regular call setup process - also sends a call setup authorization request 463 to analytics blocking device 402 that forms part of the blocking system 400. The call setup authorization request 463 may for instance be an Initial Detection Point message or IDP message at least comprising the number A of the calling party, i.e. an SS7 message similar to the IDP message that the gateway 423 would send to a Service Control Point or SCP in an Intelligent Network or IN when it requires further instructions from such SCP to route a call. Upon receipt of the call setup authorization request 463, the analytics blocking device 402 contacts the database 401 to verify if the calling party number A contained in message 463 is listed in the database 401 as a fraudulent subscriber number or not. The analytics blocking device 402 thereto for instance sends a query message 464 comprising the number A extracted from message 463, and in return receives message 465 confirming that the number A is listed as fraudulent in the database 401. Upon receipt of message 465 identifying number A as a fraudulent identity, the analytics blocking device 402 issues a call release message 466 and sends this call release message 466 as a response to call setup authorization request 463 to the gateway 423. The gateway 423 translates the call release message 466 into a call release message 467 that is sent to SIM 441 as a result of which the call 461 is blocked. In the situation where message 465 would indicate that number A is not listed as a fraudulent subscriber identity in database 401, analytics blocking device 402 would issue a call continuation message and send this call continuation message in response to the call setup authorization request 463 to the gateway 423. In the latter situation, the gateway 423 would continue and terminate the call at SIM 442 with number B, either directly as is indicated by dashed arrow 468 in Fig. 4 or indirectly via mobile switching centre 421. It is further noticed that Fig. 4 shows Service Managed Point or SMP 403 as part of the blocking system 400. SMP 403 is a central manager interfacing with both the analytics blocking device 402 and the database 401 of fraudulent subscriber identities and consequently fulfils a role of management function for the analytics blocking device 402. The blocking of an off-net SIM box 440 as illustrated by Fig. 4 completely aligns with the blocking of an on-net SIM box 240 as illustrated by Fig. 2. The functionality of on-net SIM box blocking and off-net SIM box blocking consequently can be integrated in a single embodiment of the system for performing analytics and blocking fraudulent subscriber identities according to the present invention.

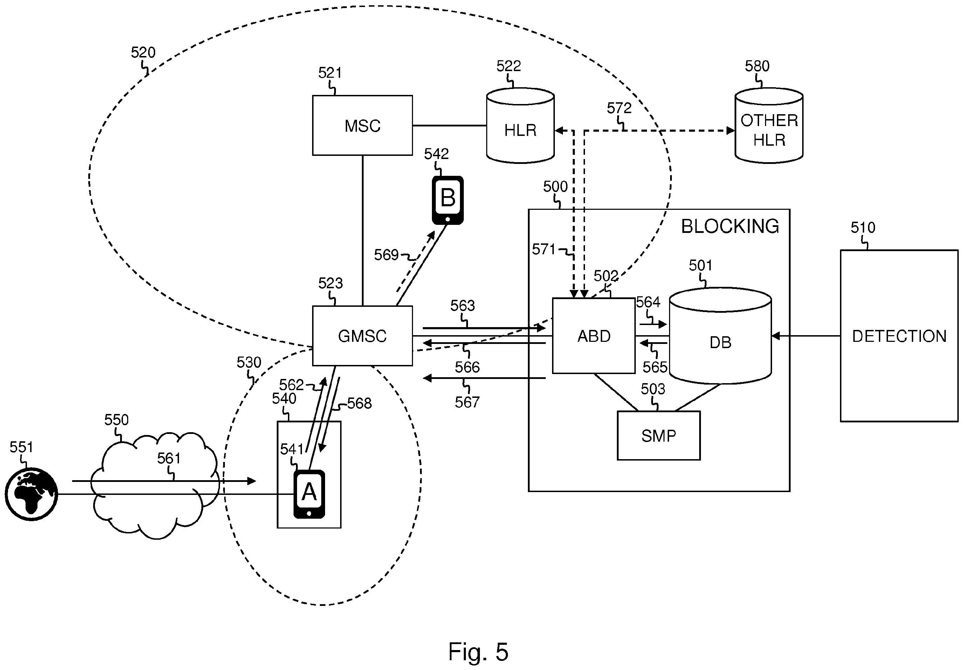

Fig. 5 illustrates blocking according to an embodiment of the invention of a fraudulent SIM 541 used for refiling fraud in a SIM box 540. Refiling fraud consists in adapting or spoofing the A-number, i.e. the calling party number, in order to enable terminating the call via a specific trunk with advantageous tariffing, for instance a trunk that is used for national traffic or a trunk that is used for traffic between neighbouring operators with advantageous inter-operator tariffs. The A-number that is used for refiling fraud typically is an inactive number or non-used number, and as such not detected as fraudulent by interconnect bypass detection systems like 510. In Fig. 5, an international call 561 to a destination SIM 542 with number B is considered. For this international call 561 to a destination number B, routed for example from a network abroad 551 across the internet 550, and intercepted to be terminated at called party B by the operator of SIM box 540 making benefit of low interconnect/termination rates between networks 530 and 520, the incoming call 561 shall be replaced by a call setup request 562 for a call from fraudulent SIM 541 with spoofed number A to SIM 542 with number B in network 520. This call setup request 562 is sent to the gateway 523 between network 530 and network 520. The gateway 523 sends a call setup authorization request 563 to analytics blocking device 502 that forms part of the blocking system 500. The call setup authorization request 563 may for instance be an Initial Detection Point message or IDP message at least comprising the spoofed number A, i.e. an SS7 message similar to the IDP message that the gateway 523 would send to a Service Control Point or SCP in an Intelligent Network or IN when it requires further instructions from such SCP to route a call. Upon receipt of the call setup authorization request 563, the analytics blocking device 502 contacts the database 501 to verify if the calling party number A contained in message 563 is listed in the database 501 as a fraudulent subscriber number or not. The analytics blocking device 502 thereto for instance sends a query message 564 comprising the spoofed number A extracted from message 563, and in return receives message 565 indicating that the number A is not listed as fraudulent in the database 501. Upon receipt of message 565 indicating that number A is not listed as fraudulent, the analytics blocking device 502 initiates a call 566 to the A number and starts analysing the response to that call. Message 566 in other words may represent an SS7 Initiate Call Attempt message to number A. Alternatively, SIP (Session Initiation Protocol) or HTTP (HyperText Transfer Protocol) may be used as technologies to initiate a call-back to the number A. In case the response is a busy signal, expected behaviour is detected as it is expected that A is calling B. In such case, the analytics blocking device 502 shall issue a call continuation message in reply to the call setup authorization request 563 and the gateway 523 shall continue terminating the call at SIM 542 as is indicated by the dashed arrow 569. In case however the call attempt 566 is answered by a route select failure or in case of absence of any response to the call attempt 566, the analytics blocking device 502 shall consult the HLR 522 of the fraud protected network 520 and/or the HLR 580 of other operators where the spoofed A number may belong to. The analytics blocking device 502 consults the CDRs in these HLRs as indicated by the dashed arrows 571 and 572. In case of absence of any CDRs for the call attempt 566 to number A, the analytics blocking device 502 concludes that the number A is a spoofed number, fraudulently used for refiling fraud. The analytics blocking device 502 issues a call release message 567 and sends this call release message 567 as a response to call setup authorization request 563 to the gateway 523. The gateway 523 translates the call release message 567 into a call release message 568 that is sent to SIM 541 as a result of which the call 561 is blocked. In addition thereto, the analytics blocking device 502 may report the number A to the database 501 such that it becomes listed as a fraudulently used number. This way, the analytics blocking device 502 assists in maintaining the database 501 of fraudulent subscriber identities and further completes this database 501 with numbers that are used for spoofing in refiling fraud attempts. It is further noticed that Fig. 5 shows Service Managed Point or SMP 503 as part of the blocking system 500. SMP 503 is a central manager interfacing with both the analytics blocking device 502 and the database 501 of fraudulent subscriber identities and consequently fulfils a role of management function for the analytics blocking device 502. The blocking of refiling fraud as illustrated by Fig. 5 completely aligns with the blocking of SIM box fraud as illustrated by Fig. 2 and Fig. 4, but requires the additional steps of a call-back to the A number and analysis of the response to the call-back. The functionality of refiling fraud blocking and SIM box blocking consequently can be integrated in a single embodiment of the system for performing analytics and blocking fraudulent subscriber identities according to the present invention. In more advanced embodiments of the invention, the call-back function to detect refiling fraud may be applied restrictively, for example only on certain trunks that are vulnerable to refiling fraud because these trunks are used for traffic with advantageous tariffing, and/or only on trunks with high volumes of traffic.

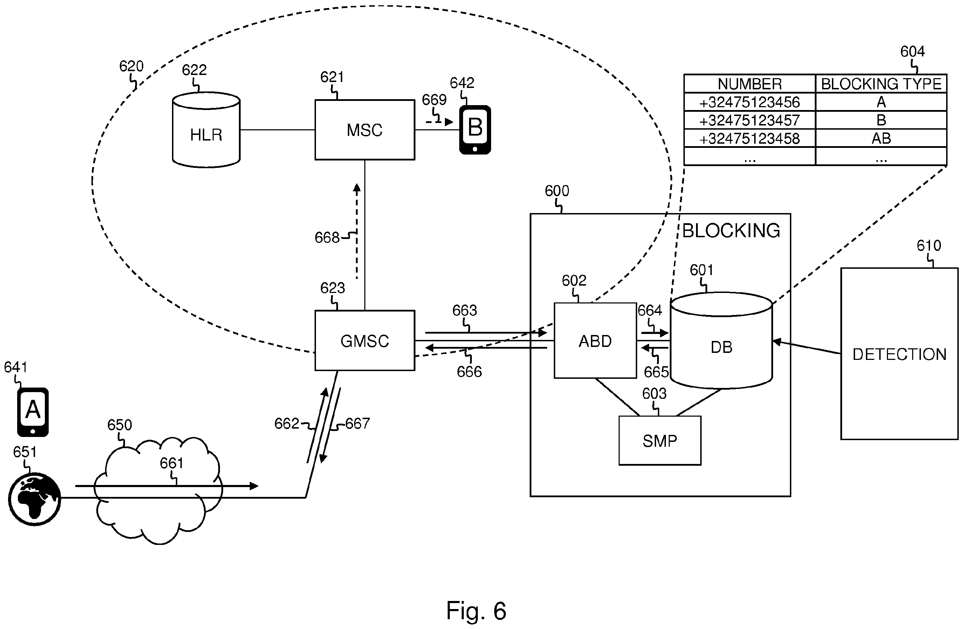

Fig. 6 illustrates blocking according to an embodiment of the invention of a fraudulent SIM 641 used for a first type of revenue sharing fraud known as Wangiri call attempts. Wangiri fraud consists in calling mobile phone numbers and then hanging up, leaving a missed call number with the victim and hoping that the curious or annoyed victim will call back. The A-number that is used for the short duration Wangiri call attempts typically is a premium rate number thus triggering expensive, overpriced international calls that bypass consumer protection laws from the victim. In Fig. 6, an Wangiri call attempt 661 to a destination SIM 642 with number B is considered. For this Wangiri call attempt 661 to a destination number B, routed for example from a network abroad 651 across the internet 650, a call setup request 662 is received by gateway 623 at the border of network 620 wherein SIM 642 with number B is residing. The gateway 623 sends a call setup authorization request 663 to analytics blocking device 602 that forms part of the blocking system 600. The call setup authorization request 663 may for instance be an Initial Detection Point message or IDP message comprising both the caller number A and called number B, i.e. an SS7 message similar to the IDP message that the gateway 623 would send to a Service Control Point or SCP in an Intelligent Network or IN when it requires further instructions from such SCP to route a call. Upon receipt of the call setup authorization request 663, the analytics blocking device 602 contacts the database 601 to verify if the calling party number A contained in message 663 and/or the called party number B contained in message 663 is/are listed in the database 601 as fraudulent or not. The analytics blocking device 602 thereto for instance sends a query message 664 comprising the number A extracted from message 663 as well as the number B extracted from message 663. In the database 601, not only the fraudulent numbers reported by detection system 610 are memorized but also the type of blocking 604 is memorized in relation to each fraudulent subscriber identity. The type of blocking 604 can be either calling party fraud (type A), called party fraud (type B), or both (type AB). Upon receipt of message 664, the database 601 verifies if number A mentioned therein is listed as fraudulent with blocking type A or blocking type AB, and the database 601 verifies if number B mentioned therein is listed as fraudulent with blocking type B or blocking type AB. As Wangiri call attempts represent calling party fraud, the A number will be listed as fraudulent with blocking type A or blocking type AB in database 601, assuming the Wangiri call attempt fraud has been detected already by detection system 610. The database 601 consequently shall return message 665 to analytics blocking device 602, indicating that the number A is listed as fraudulent in the database 601. Upon receipt of message 665 indicating that number A is fraudulent, the analytics blocking device 602 issues a call release message 666 and sends this call release message 666 as a response to call setup authorization request 663 to the gateway 623. The gateway 623 translates the call release message 666 into a call release message 667 that is sent in response to call setup request 662 as a result of which the call 661 is blocked. In case the number A extracted from the message 664 is not listed as a fraudulent identity with fraud blocking type A or fraud blocking type AB, message 665 shall indicate there is no fraud, the analytics blocking device 602 shall issue a call continuation message in reply to the call setup authorization request 663 and the gateway 623 shall continue terminating the call at SIM 642 as is indicated by the dashed arrows 668 and 669. It is noticed that termination of the call at SIM 642 in network 620 may involve additional switches like 621 and the HLR 622 of network 620. It is further noticed that Fig. 6 shows Service Managed Point or SMP 603 as part of the blocking system 600. SMP 603 is a central manager interfacing with both the analytics blocking device 602 and the database 601 of fraudulent subscriber identities and consequently fulfils a role of management function for the analytics blocking device 602. The blocking of Wangiri call attempts as illustrated by Fig. 6 completely aligns with the blocking of SIM box fraud as illustrated by Fig. 2 and Fig. 4, or the blocking of refiling fraud as illustrated by Fig. 5, but requires the additional registration of blocking types in the database 601 of fraudulent subscriber identities. The functionality of Wangiri call attempt blocking consequently can be integrated with SIM box blocking and refiling fraud blocking in a single embodiment of the system for performing analytics and blocking fraudulent subscriber identities according to the present invention.

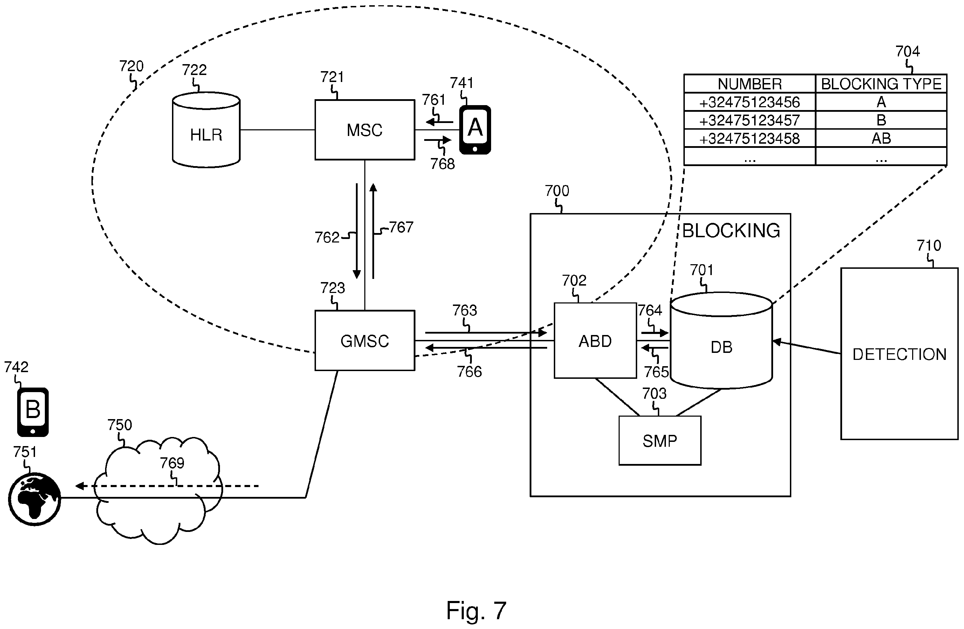

Fig. 7 illustrates blocking according to an embodiment of the invention of a fraudulent destination 742 in a second type of revenue sharing fraud known as Wangiri call backs. Wangiri fraud consists in calling mobile phone numbers and then hanging up, leaving a missed call number with the victim and hoping that the curious or annoyed victim will call back. The number that is used for the short duration Wangiri call attempts typically is a premium rate number thus triggering expensive, overpriced international calls that bypass consumer protection laws from the victim. In Fig. 7, a Wangiri call back 761 to a destination 742 with number B is considered. The destination 742 typically is an answering machine or a person taking the calls on fixed lines, or alternatively it could be a mobile SIM. For this Wangiri call back 761 to destination number B, routed for example from switch 721 in network 720 to gateway 723 at the border of network 720, a call setup request 762 is received by gateway 723. The gateway 723 sends a call setup authorization request 763 to analytics blocking device 702 that forms part of the blocking system 700. The call setup authorization request 763 may for instance be an Initial Detection Point message or IDP message comprising both the caller number A and called number B, i.e. an SS7 message similar to the IDP message that the gateway 723 would send to a Service Control Point or SCP in an Intelligent Network or IN when it requires further instructions from such SCP to route a call. Upon receipt of the call setup authorization request 763, the analytics blocking device 702 contacts the database 701 to verify if the calling party number A contained in message 763 and/or the called party number B contained in message 763 is/are listed in the database 701 as fraudulent or not. The analytics blocking device 702 thereto for instance sends a query message 764 comprising the number A extracted from message 763 as well as the number B extracted from message 763. In the database 701, not only the fraudulent numbers reported by detection system 710 are memorized but also the type of blocking 704 is memorized in relation to each fraudulent subscriber identity. The type of blocking 704 can be either calling party fraud (type A), called party fraud (type B), or both (type AB). Upon receipt of message 764, the database 701 verifies if number A mentioned therein is listed as fraudulent with blocking type A or blocking type AB, and the database 701 verifies if number B mentioned therein is listed as fraudulent with blocking type B or blocking type AB. As Wangiri call backs represent called party fraud, the B number will be listed as fraudulent with blocking type B or blocking type AB in database 701, assuming the Wangiri call backs to number B have been detected already by detection system 710. The database 701 consequently shall return message 765 to analytics blocking device 602, indicating that the number B is listed as fraudulent in the database 701. Upon receipt of message 765 indicating that number B is fraudulent, the analytics blocking device 702 issues a call release message 766 and sends this call release message 766 as a response to call setup authorization request 763 to the gateway 723. The gateway 723 translates the call release message 766 into a call release message 767 that is sent in response to call setup request 762 as a result of which the call 761 is blocked. In case the number B extracted from the message 764 is not listed as a fraudulent identity with fraud blocking type B or fraud blocking type AB, message 765 shall indicate there is no fraud, the analytics blocking device 702 shall issue a call continuation message in reply to the call setup authorization request 763 and the gateway 723 shall continue terminating the call towards destination 742 as is indicated by the dashed arrow 769 through internet 750 towards the foreign network 751 where destination 742 is residing. It is noticed that Fig. 7 further shows Service Managed Point or SMP 703 as part of the blocking system 700. SMP 703 is a central manager interfacing with both the analytics blocking device 702 and the database 701 of fraudulent subscriber identities and consequently fulfils a role of management function for the analytics blocking device 702. The blocking of Wangiri call backs as illustrated by Fig. 7 completely aligns with the blocking of SIM box fraud as illustrated by Fig. 2 and Fig. 4, the blocking of refiling fraud as illustrated by Fig. 5, and/or the blocking of Wangiri call attempts as illustrated by Fig. 6. Just like the blocking of Wangiri call attempts as illustrated by Fig. 6, it requires the additional registration of blocking types in the database 701 of fraudulent subscriber identities. The functionality of Wangiri call back blocking consequently can be integrated with SIM box blocking, refiling fraud blocking and/or Wangiri call attempt blocking in a single embodiment of the system for performing analytics and blocking fraudulent subscriber identities according to the present invention.

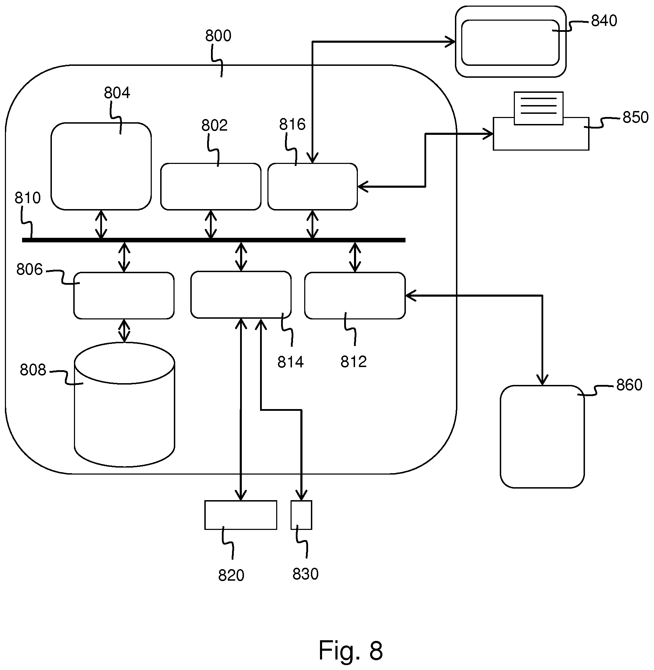

Fig.8 shows a suitable computing system 800 for hosting embodiments of the system for performing analytics and blocking of fraudulent subscriber identities according to the invention, or essential parts thereof like the analytics blocking device in the above described embodiments. Computing system 800 may in general be formed as a suitable general purpose computer and comprise a bus 810, a processor 802, a local memory 804, one or more optional input interfaces 814, one or more optional output interfaces 816, a communication interface 812, a storage element interface 806 and one or more storage elements 808. Bus 810 may comprise one or more conductors that permit communication among the components of the computing system. Processor 802 may include any type of conventional processor or microprocessor that interprets and executes programming instructions. Local memory 804 may include a random access memory (RAM) or another type of dynamic storage device that stores information and instructions for execution by processor 802 and/or a read only memory (ROM) or another type of static storage device that stores static information and instructions for use by processor 804. Input interface 814 may comprise one or more conventional mechanisms that permit an operator to input information to the computing device 800, such as a keyboard 820, a mouse 830, a pen, voice recognition and/or biometric mechanisms, etc. Output interface 816 may comprise one or more conventional mechanisms that output information to the operator, such as a display 840, a printer 850, a speaker, etc. Communication interface 812 may comprise any transceiver-like mechanism such as for example two 1Gb Ethernet interfaces that enables computing system 800 to communicate with other devices and/or systems, for example mechanisms for communicating with one or more other computing systems. The communication interface 812 of computing system 800 may be connected to such another computing system 860 by means of a local area network (LAN) or a wide area network (WAN, such as for example the internet, in which case the other computing system may for example comprise a suitable web server. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example 1TB SATA disk drives, and control the reading and writing of data to and/or from these storage elements 808. Although the storage elements 808 above is described as a local disk, in general any other suitable computer-readable media such as a removable magnetic disk, optical storage media such as a CD or DVD, -ROM disk, solid state drives, flash memory cards, ... could be used.

The steps executed in the method performing analytics and blocking fraudulent subscriber identities in a communication network according to the present invention, illustrated by the above embodiments, may be implemented as programming instructions stored in local memory 804 of the computing system 800 for execution by its processor 802. Alternatively the instructions may be stored on the storage element 808 or be accessible from another computing system through the communication interface 812.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (200; 400; 500; 600; 700) for performing analytics and blocking fraudulent subscriber identities in a communication network (220; 420; 520; 620; 720), said system (200; 400; 500; 600; 700) comprising:
- a database (201; 401; 501; 601; 701) configured to memorize fraudulent subscriber identities reported thereto by one or more fraud detection system (210; 410; 510; 610; 710);
- an analytics blocking device (202; 402; 502; 602; 702) installed in said communication network (201;401; 501; 601; 701) and configured to:
- receive for a call (261; 461; 561; 661; 761) to be terminated at a destination number (B) a call setup authorization request (265; 463; 563; 663; 763) from a switch or gateway (221; 423; 523; 623; 723), said call setup authorization request (265; 463; 563; 663; 763) at least comprising the calling party number (A) of said call (261; 461; 561; 661; 761);
- compare said calling party number (A) of said call (261; 461; 561; 661; 761) with subscriber identities in said database (201; 401; 501; 601; 701); and
- instruct said switch or gateway (221; 423; 523; 623; 723) to release said call (261; 461; 561; 661; 761) in case said calling party number (A) is identified as fraudulent by said database (201; 401; 501; 601; 701) or allow said switch or gateway (221; 423; 523; 623; 723) to continue terminating said call (261; 461; 561; 661; 761) at said destination number (B) in case said calling party number (A) is not identified as fraudulent.

2. A system (500) for performing analytics and blocking fraudulent subscriber identities in a communication network (520) according to claim 1,
wherein said analytics blocking device (502) is further configured to:
- initiate a call attempt (566) to said calling party number (A) in case said calling party number (A) is not identified as fraudulent by said database (501); and
- allow said switch or gateway (523) to continue terminating said call (561) at said destination number (B) in case a busy signal is received in response to said call attempt (566), or
- analyse a response to said call attempt (566) and detect no response or a route select failure;
- analyse call data records in case of no response or a route select failure, and detect fraud in case of absence of call data records for said calling party number (A);
- report said calling party number (A) as fraudulent to said database (501); and
- instruct said switch or gateway (523) to release said call (561) in case said calling party number (A) is identified as fraudulent.

3. A system (500) for performing analytics and blocking fraudulent subscriber identities in a communication network (520) according to claim 2,
wherein said analytics blocking device (502) is configured to:
- initiate said call attempt (566) only when said call (561) is received by said switch or gateway (523) at a selected trunk or from a selected cell.

4. A system (200; 400; 500; 600; 700) for performing analytics and blocking fraudulent subscriber identities in a communication network (220; 420; 520; 620; 720) according to one of the preceding claims,
wherein said analytics blocking device (202; 402; 502; 602; 702) is further configured to:
- activate monitoring of said call (261; 461; 561; 661; 761) when allowing said switch or gateway (221; 423; 523; 623; 723) to continue terminating said call (261; 461; 561; 661; 761) at said destination number (B);
- continue to compare said calling party number (A) with subscriber identities in said database (201; 401; 501; 601 ; 701); and
- instruct said switch or gateway (221; 423; 523; 623; 723) to release said call (261; 461; 561; 661; 761) in case said calling party number (A) is identified as fraudulent by said database (201; 401; 501; 601; 701).

5. A system (600; 700) for performing analytics and blocking fraudulent subscriber identities in a communication network (620; 720) according to one of the preceding claims,
- wherein said database (601; 701) is further configured to memorize a type of blocking (604; 704) for fraudulent subscriber identities, said type of blocking (604; 704) being indicative for calling party fraud (A), called party fraud (B), or both (AB); and
- wherein said analytics blocking device (602; 702) is further configured to:
- receive as part of said call setup authorization request (663; 763) also a called party number (B) of said call (661; 761);
- compare said calling party number (A) of said call (661; 761) with subscriber identities in said database (601; 701) whose type of blocking (604; 704) is indicative for calling party fraud (A) or both (AB);
- compare said called party number (B) of said call (661; 761) with subscriber identities in said database (601; 701) whose type of blocking (604; 704) is indicative for called party fraud (B) or both (AB); and
- instruct said switch or gateway (623; 723) to release said call (661; 761) in case said calling party number (A) or said called party number (B) is identified as fraudulent by said database (601; 701) or allow said switch or gateway (623; 723) to continue terminating said call (661; 761) at said destination number (B) in case said calling party number (A) and said called party number (B) are not identified as fraudulent.

6. A system (600; 700) for performing analytics and blocking fraudulent subscriber identities in a communication network (620; 720) according to claim 5,
wherein said analytics blocking device (602; 702) is further configured to:
- activate monitoring of said call (661; 761) when allowing said switch or gateway (623; 723) to continue terminating said call (661; 761) at said destination number (B);
- continue to compare said calling party number (A) of said call (661; 761) with subscriber identities in said database (601; 701) whose type of blocking (604; 704) is indicative for calling party fraud (A) or both (AB);
- continue to compare said called party number (B) of said call (661; 761) with subscriber identities in said database (601; 701) whose type of blocking (604; 704) is indicative for called party fraud (B) or both (AB); and
- instruct said switch or gateway (623; 723) to release said call (661; 761) in case said calling party number (A) or said called party number (B) is identified as fraudulent by said database (601; 701).

7. A system (200; 400; 500; 600; 700) for performing analytics and blocking fraudulent subscriber identities in a communication network (220; 420; 520; 620; 720) according to claim 4 or claim 6,
wherein said analytics blocking device (202; 402; 502; 602; 702) is configured to: - request said monitoring of said call (261; 461; 561; 661; 761) only when said call (261; 461; 561; 661; 761) is received by said switch or gateway (221; 423; 523; 623; 723) at a selected trunk or from a selected cell.

8. A system (200; 400; 500; 600; 700) for performing analytics and blocking fraudulent subscriber identities in a communication network (220; 420; 520; 620; 720) according to one of the preceding claims, further comprising an application programming interface for data exchange between said analytics blocking device (202; 402; 502; 602; 702) and said switch or gateway (221; 423; 523; 623; 723) using one of the following protocols:
- SS7/INAP;
- SS7/CAP;
- SS7/MAP;
- SIP;
- DIAMETER;
- HTTP.

9. A system (200; 400; 500; 600; 700) for performing analytics and blocking fraudulent subscriber identities in a communication network (220; 420; 520; 620; 720) according to one of the preceding claims, further comprising an application programming interface for data exchange between said one or more fraud detection system (210; 410; 510; 610; 710) and said database (201; 401; 501; 601; 701) using one of the following protocols:
- FTP;
- HTTP.

10. A system (200; 400; 500; 600; 700) for performing analytics and blocking fraudulent subscriber identities in a communication network (220; 420; 520; 620; 720) according to one of the preceding claims, said system (200; 400; 500; 600; 700) comprising multiple analytics blocking devices similar to said analytics blocking device (202; 402; 502; 602; 702) and configured for redundant communication with switches or gateways in said communication network (220; 420; 520; 620; 720).

11. A system (200; 400; 500; 600; 700) for performing analytics and blocking fraudulent subscriber identities in a communication network (220; 420; 520; 620; 720) according to one of the preceding claims, said system (200; 400; 500; 600; 700) comprising a messaging device configured to provide information to the calling party (A) in the form of a voice message or text message.

12. A method of performing analytics and blocking fraudulent subscriber identities in a communication network (220; 420; 520; 620; 720), said method comprising:
- memorizing in a database (201; 401; 501; 601; 701) fraudulent subscriber identities reported thereto by one or more fraud detection system (210; 410; 510; 610; 710);
- at an analytics blocking device (202; 402; 502; 602; 702) installed in said communication network (201; 401; 501; 601; 701):
- receiving for a call (261; 461; 561; 661; 761) to be terminated at a destination number (B) a call setup authorization request (265; 463; 563; 663; 763) from a switch or gateway (221; 423; 523; 623; 723), said call setup authorization request (265; 463; 563; 663; 763) at least comprising the calling party number (A) of said call (261; 461; 561; 661; 761);
- comparing said calling party number (A) of said call (261; 461; 561; 661; 761) with subscriber identities in said database (201; 401; 501; 601; 701); and
- instructing said switch or gateway (221;423; 523; 623; 723) to release said call (261; 461; 561; 661; 761) in case said calling party number (A) is identified as fraudulent by said database (201; 401; 501; 601; 701) or allowing said switch or gateway (221; 423; 523; 623; 723) to continue terminating said call (261; 461; 561; 661; 761) at said destination number (B) in case said calling party number (A) is not identified as fraudulent.
